# EUROPÄISCHE PATENTSCHRIFT

(11) **EP 1 319 640 B1**
(45) Veröffentlichungstag und Bekanntmachung des Hinweises auf die Patenterteilung: **05.07.2006**
(21) Anmeldenummer: 02026979.1
(22) Anmeldetag: 04.12.2002
(51) Int. Cl.: C04B 41/86, F16D 69/02

(54) **Verfahren zum Oxidationsschutz faserverstärkter Verbundwerkstoffe**
Process for the oxidation protection of fibre reinforced composites
Procédé pour la protection anti-oxydation de matériaux composites à renfort fibreux

(30) Priorität: 13.12.2001 DE 10161218
(43) Veröffentlichungstag der Anmeldung: 18.06.2003
(73) Patentinhaber: AUDI AG, 85045 Ingolstadt (DE)
(72) Erfinder: Bauer, Moritz, 86153 Augsburg (DE); Christ, Martin, Dr., 86517 Wehringen (DE); Gruber, Udo, 86356 Neusäss (DE); Kienzle, Andreas, Dr., 86672 Thierhaupten (DE); Rosenlöcher, Jens, 86153 Augsburg (DE); Zimmermann-Chopin, Rainer, Dr,, 86679 Ellgau (DE)
(74) Vertreter: Deckers, Hellmuth Alexander

(56) Entgegenhaltungen:
- WO-A-01/60763
- WO-A-02/44106
- DE-A- 19 710 105
- US-A- 5 725 955

## Beschreibung

Die Erfindung betrifft ein Verfahren zum Oxidationsschutz faserverstärkter kohlenstoffhaltiger Verbundwerkstoffe, gemäß dem Oberbegriff von Anspruch 1.

Bei solchen faserverstärkten kohlenstoffhaltigen Werkstoffen besteht das Problem, daß der Kohlenstoff insbesondere bei Anwendungen unter höherer Temperatur zur Oxidation neigt. Dieses Verhalten ist insbesondere dann von Nachteil, wenn aus dem kohlenstoffhaltigen Werkstoff in einer Hochtemperaturumgebung eingesetzte Formkörper gebildet werden, wie beispielsweise Auskleidungen im Ofenbau, Brennkammern oder Bremsscheiben von Fahrzeugen. Letztere werden beispielsweise aus mit Kohlenstofffasern verstärkten Verbundwerkstoffen mit keramischer Matrix wie C/SiC-Werkstoffe (mit Kohlenstofffasern verstärktes Siliciumcarbid mit Si und/oder C-Phasen) gefertigt. Bei solchen Bremsscheiben konnte bei Betriebstemperaturen von ca. 600 °C bis über 1000 °C in der Vergangenheit unerwünschter Abbrand beobachtet werden.

Aus dem Stand der Technik sind deshalb Ansätze zum Schutz der genannten Werkstoffe vor Oxidation bekannt.

In dem Dokument WO 02/ 44106 werden oxydationsgeschützte C/C-Verbundwerkstoffe beschrieben, die eine Beschichtung aus Siliciumcarbid aufweisen. Der Oxydationsschutz wird bewirkt durch Aufbringen einer auf Phosphorsäure basierenden Lösung, die daneben mindestens eine Komponente ausgewählt aus Aluminium-dihydrogenphosphat, Manganhydrogenphosphat und Zinkphosphat enthält, sowie einen Massenanteil von 0,1 % bis 25 % eines Mono-, Di- oder Tri-Alkalimetall-phosphats, und optional Bortrioxid. Eine naßchemische Oxydation durch Perborate, Perphosphate oder Perphosphorsäure einerseits oder durch anodische Oxydation andererseits wird hier nicht beschrieben.

Das Dokument US 5,725,955 betrifft ein Verfahren zum Schutz von Kohlenstoff enthaltenden Verbundwerkstoffen gegen Oxydation, wobei die Verbundwerkstoffe mit einer Zusammensetzung enthaltend eine Mischung von Phosphaten, Siliciumdioxid und Aluminiumoxid zugehörig zu dem P₂O₅ - SiO₂ - Al₂O₃ - System beschichtet werden, die durch Aufsprühen oder Aufpinseln aufgetragen wird. Die Umwandlung der Beschichtung in ein Glas geschieht jedoch erst während des Gebrauchs, oder durch thermische Vorbehandlung unter Inertgas bei 800 °C bis 1000 °C. Der Verbundwerkstoff kann ein C-SiC-Verbundwerkstoff sein, der durch Aufeinanderschichten von Geweben aus Kohlenstoffasern, Gasinfiltration mit pyrolytisch abgeschiedenem Kohlenstoff und anschließend Gasinfiltration mit pyrolytisch abgeschiedenem Siliciumcarbid hergestellt wird. Ein Verbundwerkstoff, der freies Silicium enthält, oder die Bildung von SiO₂ in dem Verbundwerkstoff durch naßchemische Behandlung des Verbundwerkstoffs sind aus diesem Dokument nicht bekannt.

Beispielsweise beschreibt die EP 0 619 801 B1 ein gattungsgemäßes Verfahren zum Oxidationsschutz faserverstärkter, kohlenstoffhaltiger Verbundwerkstoffe, deren Matrix zumindest in der Randschicht Siliciumcarbid (SiC) enthält. Genauer wird das Ausgangsmaterial durch einen C-SiC-Werkstoff gebildet, der eine aus der Gasphase abgeschiedene reine SiC-Matrix aufweist, in welcher kein freies Si vorhanden ist.

Das bekannte Verfahren umfasst unter anderem die folgenden Schritte :
a) Bildung eines äußeren Belags auf der keramischen Oberfläche des Verbundwerkstoffs durch eine ein Gemisch von Phosphaten und Silicium- und Aluminiumoxid enthaltende Zusammensetzung,
b) nach Trocknung Durchführung einer Wärmebehandlung bei einer Temperatur, welche ausreicht, um den äußeren Belag in nicht löslichen Zement umzuwandeln, die zur Ausbildung eines selbstheilendes Glas geeignet sind.

Der äußere Belag wird durch Aufpinseln oder Aufspritzen der wäßrigen, phosphathaltigen Suspension auf die keramische Oberfläche des Verbundwerkstoffs erzeugt. Die Umwandlung des nach der Wärmebehandlung einen Zement bildenden Belags in ein selbstheilendes Glas erfolgt dann während der Verwendung des Werkstoffs bei einer Betriebstemperatur, welche größer oder gleich der Erweichungstemperatur ist oder durch eine weitere Wärmebehandlung oberhalb der Erweichungstemperatur, wobei unter einem selbstheilendem Glas ein Glas verstanden wird, welches mit der Zeit auftretende Oberflächenrisse und Schädigungen unter höheren Temperaturen und ohne äußere Einflußnahme selbsttätig wieder verschließt.

Der Erfindung liegt die Aufgabe zugrunde, ein Verfahren der eingangs erwähnten Art derart weiter zu entwickeln, daß ein verbesserter Oxidationsschutz des Verbundwerkstoffs erreicht wird. Hierbei sollte die Herstellung des Werkstoffs in der Weise erfolgen, daß das Verfahren gegenüber der bisherigen Herstellung nicht wesentlich größeren Aufwand in Form von Kosten und Zeit verursacht. Diese Aufgabe wird erfindungsgemäß durch die kennzeichnenden Merkmale von Anspruch 1 gelöst.

Gegenüber dem Stand der Technik, bei dem der Oxidationsschutz an einem faserverstärkten, kohlenstoffhaltigen Verbundwerkstoff ausgebildet wird, dessen Matrix lediglich Siliciumcarbid (SiC), aber kein freies Silicium (Si) enthält, findet gemäß der Erfindung der Oxidationsschutz an einem Verbundwerkstoff statt, der zumindest in der Randschicht neben Siliciumcarbid (SiC) auch Silicium (Si) und/oder Siliciumlegierungen beinhaltet. In Verbindung mit der zusätzlichen oxidierenden Behandlung wird bereits aus dem in der Matrix vorhandenen Silicium (Si) oder aus dessen Legierungen Siliciumoxid (SiO₂) erzeugt. Die Phosphatierung schließt das in der Matrix vorhandene freie Silicium (Si) oder ein hieraus intermediär gebildetes Siliciumoxid auf und bildet ein Silikatglas mit selbstheilenden Eigenschaften, vorzugsweise Al₂O₃-SiO₂-P₂O₅. Die Gegenwart von Silicium in der Matrix des Verbundwerkstoffs hat demzufolge den Vorteil, daß es bereits während der Herstellung des Verbundwerkstoffs zur Ausbildung der selbstheilenden Glasphase kommt. Dies spielt insbesondere bei aus dem Verbundwerkstoff hergestellten Bremsscheiben von Fahrzeugen eine Rolle, welche bereits vor einem ersten, unter höheren Temperaturen erfolgenden Einsatz oxidativen Belastungen ausgesetzt sind, beispielsweise wenn fabrikneue Fahrzeuge im Freien auf Halde bevorratet werden. Weiterhin beschleunigt und unterstützt die Gegenwart des matrixgebundenen Siliciums im Ausgangswerkstoff die Erzeugung des für den Oxidationsschutz vorteilhaften selbstheilenden Glases. Dies ist insbesondere für den Einsatz des fertigen Produktes von Bedeutung, wo das glasbildende SiO₂ aus der Matrix ständig nachgebildet und in das selbstheilende Glas aufgenommen werden kann. Schließlich ergibt sich hierdurch eine bessere Anbindung der Glasphase am Verbundwerkstoff, weil das Silicium bereits in dessen Matrix vorhanden ist und nicht wie beim Stand der Technik nur oberflächlich aufgetragen wird.

Vorteilhafte Ausgestaltungen der Erfindung sind in den Unteransprüchen aufgeführt.

Das Ausgangsmaterial des erfindungsgemäßen Verfahrens bildet demzufolge eine faserverstärkte Verbundkeramik, insbesondere aus der Klasse der C/SiC-Werkstoffe, bei welchen vorzugsweise kohlenstoffbasierte Fasern, insbesondere Kohlenstofffasern oder Graphitfasern, in einer überwiegend aus SiC, Si und/oder Si-Legierungen, und C gebildeten Matrix gebunden sind. Die C/SiC-Verbundkeramiken können auch andere hochtemperaturbeständige Fasern umfassen, die neben Kohlenstoff noch weitere Elemente, wie beispielsweise Si, B, N, O oder Ti enthalten. Im folgenden und in den Ansprüchen sind unter dem Begriff Fasern sowohl einzelne Fasern als auch Faserbündel, die durch Polymere oder deren Pyrolyseprodukte, bevorzugt graphitischer Kohlenstoff, gebunden sein können, zu verstehen.

Die Vorgehensweise zur Herstellung von C/SiC-Werkstoff ist dadurch gekennzeichnet, daß zunächst ein CFC-Werkstoff gebildet wird. Erfindungsgemäß besonders bevorzugt ist die Herstellung von kurzfaserbündelverstärktem CFK (Kohlenstofffaserverstärkte Kunststoffe), bestehend aus mit einer carbonisierbaren Substanz und/oder mit Kohlenstoff beschichteten Kohlenstofffasern oder Faserbündeln und Füllstoffen und Bindern, der gegebenenfalls mit einem Kern zur gewünschten Form gepresst und ausgehärtet und hierauf carbonisiert und/oder graphitiert wird, so daß ein CFC- oder C/C- Formkörper als Zwischenprodukt entsteht. Diese Formkörper werden vorzugsweise als Bremsscheibe, Bremsbelag oder Kupplungsscheibe gefertigt und weisen vorzugsweise annähernd die Endabmessungen des Endprodukts auf. Wegen der guten Temperaturbeständigkeit des C/SiC-Werkstoffs ist jedoch jegliche weitere Anwendung denkbar, bei welcher hohe Temperaturen auftreten, beispielsweise als Auskleidungskörper für Öfen und Brennkammern oder als Hitzeschilde. Großflächige Bauteile werden hier üblicherweise mit Langfasern oder Fasermatten verstärkt.

Da das CFC- Zwischenprodukt im Vergleich zur späteren Verbundkeramik noch eine relativ geringe Härte aufweist, werden spanabhebende Bearbeitungsgänge wie beispielsweise das Anbringen von Bohrungen bevorzugt am Zwischenprodukt durchgeführt.

Das Basismaterial ist indessen nicht auf CFC-Werkstoffe beschränkt. Als Fasermaterial können ebenso auch weitere temperaturstabile Keramikfasern, insbesondere auf der Basis von SiO₂, Al₂O₃, ZrO₂, oder SiC, verwendet werden, die mit Kohlenstoff oder Graphit beschichtet wurden.

Der vorzugsweise verwendete Formkörper aus kohlenstofffaserverstärktem Kohlenstoffwerkstoff wird anschließend endformnah bearbeitet und dann bei Temperaturen um etwa 1600 °C im Vakuum oder unter Inertgas mit einer Siliciumschmelze oder einer Siliciumlegierungsschmelze infiltriert, wodurch zumindest ein Teil des Kohlenstoffs der Matrix und/oder der Fasern in SiC umgewandelt wird. Neben Silicium können als weitere Bestandteile der Schmelze auch die Metalle der Nebengruppen I bis VIII verwendet werden, insbesondere Ti, Cr, Fe, Mo, B und Ni. Durch die Flüssiginfiltration des CFC-Formkörpers entsteht ein dichter, fester und sehr harter Formkörper aus C/SiC-Werkstoff enthaltend Fasern, im allgemeinen Kohlenstofffasern, mit einer Matrix aus überwiegend SiC, Si und C.

Alternativ kann die Matrix des Formkörpers ganz oder teilweise durch eine Gasphaseninfiltration (CVD oder CVI) erzeugt werden. Dann weist die Matrix einen relativ hohen SiC-Gehalt auf, typischerweise über 95%. Weiterhin kann die Herstellung der Matrix durch die Pyrolyse von Sihaltigen, präkeramischen Polymeren erfolgen, wie sie zum Beispiel durch die Pyrolyse von Polymeren entstehen, die eines oder mehrere der Elemente Si, B, C, N, P oder Ti enthalten.

Die Matrix enthält im Gegensatz zu den klassischen Sinterverfahren von SiC oder im Gegensatz zur Gasphaseninfiltration mit reinem SiC noch freies Silicium, das aus nicht umgesetztem Si-Infiltrat resultiert. Werden als Begleitmetalle der Infiltration Fe, Co, Ni, Cu, Cr, Al verwendet, so werden diese Metalle nach der Erstarrung der Restschmelze bevorzugt in der Si-Phase gelöst oder ausgeschieden. In jedem der drei Fälle weist der aus dem jeweiligen Verfahren hervorgehende Formkörper aus Verbundwerkstoff daher eine Verbundkeramik mit in einer Matrix aus SiC, Si und C eingebetteten, kohlenstoffhaltigen Fasern auf.

Wesentlich ist hierbei, daß der Si-Gehalt der Matrix zumindest in der Randschicht oberhalb 1 Gew.-% liegt. Bevorzugt liegt der Si-Gehalt im Bereich von 1 bis 30 Gew.-% bezogen auf das Gesamtgewicht des Formkörpers oder bezogen auf das Gewicht seiner mit der SiC-haltigen Matrix durchsetzten Randschicht.

Der SiC-Gehalt in der Matrix der Verbundkeramik liegt vorzugsweise oberhalb 50 Gew.-%, weiter bevorzugt oberhalb 35 Gew.-% bezogen auf das Gesamtgewicht des Formkörpers. Je nach Tiefe der Infiltration mit den matrixbildenden Verbindungen kann sich diese Verbundkeramik nur auf eine Randschicht beschränken oder auch durch den gesamten Formkörper erstrecken. Der Gewichtsanteil der Matrix und deren Zusammensetzung können dabei innerhalb des Formkörpers variieren, insbesondere in der Tiefe, wobei der Gewichtsanteil der Matrix an der Oberfläche bevorzugt höher liegt als im inneren des Formkörpers, mitunter auch bei nahezu 100 %.

Gemäß einer bevorzugten Variante wird der CFC-Werkstoff durch Flüssigsilizierung in C/SiC umgewandelt. Dabei spielt es keine Rolle, ob der CFC-Werkstoff ganz oder nur teilweise mit Silicium oder Siliciumlegierung infiltriert und zu C/SiC umgesetzt wird. Es muss lediglich die Randschicht des Formkörpers zu C/SiC umgesetzt worden sein, die auch zu nahezu 100 % aus der Matrix bestehen kann. Die Erfindung erstreckt sich daher auch auf ein Verfahren zur Herstellung von CFC-Formkörpern, bei denen eine Silizierung lediglich im Randbereich durchgeführt wurde, aber der Kern aus CFC bestehen bleibt. Die Dicke der zu C/SiC umgesetzten Randschicht beträgt mindestens 0,2 mm, vorzugsweise mehr als 0,5 mm und besonders bevorzugt mehr als 5 mm.

Die Flüssigsilizierung von CFC führt nach dem Abkühlen des Werkstoffs von einer Prozesstemperatur von etwa 1500 bis 1900 °C auf Raumtemperatur aufgrund der unterschiedlichen Temperaturausdehnungskoeffizienten von Fasern und Matrix zu einer mit offenen Mikrorissen und Poren durchsetzten Matrix, wobei sich die offenen Risse und Poren bis weit in die Tiefe des aus der C/SiC-Keramik bestehenden Formkörpers erstrecken und sich bevorzugt an den Verstärkungsfasem ausbilden. Dies gilt ebenso für die Verfahren der Gasphaseninfiltration oder der Polymerpyrolyse, da auch hier von hoher Prozesstemperatur auf geringere Temperaturen abgekühlt wird. Dieser Effekt tritt besonders dann auf, wenn die SiC-haltige Randschicht einen höheren Gewichtsanteil der Matrix als das Innere des Werkstoffes hat.

Diese offenen Risse und Poren bilden Pfade für eindringenden Sauerstoff, so daß insbesondere die in der Matrix gebundenen Kohlenstofffasern, die mit Kohlenstoff beschichteten Fasern, oder der freie Kohlenstoff der Oxidation ausgesetzt sind. Anwendungen des Formkörpers im Hochtemperaturbereich und in korrosiven Medien, wie sie für derartige Werkstoffe üblich sind, verstärken den oxidativen Angriff weiter.

Zum Ausbilden einer Oxidationsschutzschicht wird der aus C/SiC-Verbundwerkstoff bestehende Formkörper zunächst mit einer wäßrigen, phosphathaltigen Lösung imprägniert, wobei die wäßrige Lösung beispielsweise durch eine Aluminiumphosphatlösung gebildet wird, welche vorzugsweise mindestens 15 Masse- % Monoaluminiumphosphat (Al(H₂PO₄)₃) enthält.

Weitere bevorzugte Komponenten der phosphathaltigen Lösung sind Zinksalze, Boroxid, oder Kupfersalze. Diese Bestandteile können im fertigen selbstheilenden Glas durchaus als wesentliche Bestandteile auftreten, wobei sie dann typischerweise als Phosphate oder Oxide im Glas gebunden sind. Die wässrige Lösung kann bis in die Tiefe der offenen Poren und Risse der Matrix eindringen und bildet dort nach Trocknung einen Belag. Anschließend wird eine Wärmebehandlung bei einer Temperatur durchgeführt, welche wenigstens ausreicht, um das kristallwasserhaltige Aluminiumphosphat zu zersetzen und den Belag in nicht lösliche Verbindungen umzuwandeln, die zur Ausbildung eines selbstheilenden Glases geeignet sind.

Vorzugsweise wird die Wärmebehandlung in oxidierender Atmosphäre und/oder Luft bei einer Temperatur oberhalb 480 °C durchgeführt. Die Dauer der Wärmebehandlung nimmt mit steigender Temperatur ab. Sie liegt für 480 °C bei ca. 4 bis 24 h und bei 800 °C bei unter 1 h.

Die Durchführung der Wärmebehandlung an Luft stellt gegenüber der Wärmebehandlung in Schutzgas (beispielsweise N₂) beim Stand der Technik eine wesentliche Kosteneinsparung dar.

Anstatt den Formkörper aus Verbundwerkstoff während der Wärmebehandlung zu oxidieren, erfolgt dies vor der Imprägnierung, oder zwischen der Imprägnierung und der Wärmebehandlung durch eine naßchemische Behandlung. Die naßchemische Behandlung wird typischerweise durch Oxidationsmittel, wie beispielsweise Perborate, oder Peroxophosphorsäure, bevorzugt in der Phosphatlösung ausgelöst. Ebenso ist es möglich, den Verbundwerkstoff anodisch zu oxidieren.

Auch nach der Wärmebehandlung ist die Oxidation möglich, wobei es dann zweckmäßig ist, die Beschichtung auf eine Temperatur deutlich oberhalb ca. 480 °C zu erwärmen, um das neugebildete SiO₂ mit der aluminiumphosphathaltigen Schicht umzusetzen.

Entscheidend ist, daß durch die oxidierende Behandlung in der Matrix Siliciumoxid erzeugt wird, welches gemeinsam mit einem eventuell verbleibenden Restanteil an freiem Silicium vermittels der Phosphatierung aufgeschlossen wird und ein Silikatglas mit selbstheilenden Eigenschaften bildet, im vorliegenden Fall beispielsweise Al₂O₃-SiO₂-P₂O₅. Die Oxidationsschutzschicht in Form des Glases füllt dann die als Oxidationspfade wirkenden offenen Risse und Poren des Formkörpers vollständig und dicht aus und weist bei Temperaturen oberhalb von ca. 500 °C selbstheilende Eigenschaften auf.

Wie eingangs erwähnt, werden gemäß einer besonders zu bevorzugenden Anwendung des erfindungsgemäßen Verfahrens aus dem mit der Oxidationsschutzschicht versehenen C/SiC-Werkstoff Bremsscheiben, Bremsbeläge oder Kupplungsscheiben von Fahrzeugen gefertigt. Im Betrieb können diese Bauteile Temperaturen von über 500 °C erreichen, so daß die selbstheilenden Eigenschaften der gläsernen Oxidationsschutzschicht eintreten.

### Beispiel 1 (Vergleich) :

Zur Herstellung einer Bremsscheibe mit Oxidationsschutz wurde eine durch Flüssigsilizieren eines CFC-Basiskörpers hergestellte Scheibe, gemäß dem Verfahren nach DE 197 10 105 A1 verwendet.

Die silizierte Bremsscheibe mit einem Außenradius von 350 mm und innenliegenden Lüftungskanälen wurde getrocknet und entfettet. Hierauf wurde die Scheibe im Unterdruck (absoluter Druck ca. 2 bis 12 mbar) mit einer wäßrigen Lösung von Monoaluminiumphosphat (50 Gew.- %) imprägniert. Hierauf wurde die imprägnierte Scheibe an Luft unter Zutritt von Luftsauerstoff bei mehrere Stunden bei 480 °C getrocknet. Zur Messung der Schutzwirkung wurde die Scheibe hierauf bei einer Temperatur von 800 °C im Luftstrom unter oxidierenden Bedingungen ausgelagert. Beim ersten Hochheizen auf 800 °C wird SiO₂ gebildet und in die Aluminiumphosphatschicht eingelagert.

Im Vergleich zur ungeschützten Scheibe nimmt der durch die Oxidation verursachte Gewichtsverlust nach einer Auslagerungsdauer von 3 h um 90 % ab.

### Beispiel 2 (Vergleich):

Zur Bestimmung der Beständigkeit der Schutzbeschichtung wurden imprägnierte Scheiben wie in Beispiel 1 beschrieben hergestellt. Eine bei 480 °C getrocknete Scheibe wurde auf 800 °C erhitzt und in Wasser abgeschreckt. Hierauf wurde wie im Beispiel 1 beschrieben bei 800 °C ausgelagert und der Massenverlust durch Abbrand bestimmt. Die Schutzwirkung der Oxidationsschicht ließ durch die Abschreckung im Wasser nicht nach. Weitere Scheiben wurden für 24 Stunden in kochendem Wasser behandelt. Auch hierdurch wurde die Schutzwirkung der Oxidationsschutzschicht nicht verändert, im Gegensatz dazu, wie es bei einer reinen Phosphatglasschicht zu erwarten gewesen wäre.

Üblicherweise wirkt eine durch Phosphatierung erzeugte Oxidationsschutzschicht nur bis zu Temperaturen von ca. 700 °C, wohingegen sie bei höheren Temperaturen sogar den Abbrand fördert. Demgegenüber konnte bei aus dem erfindungsgemäß hergestellten Verbundwerkstoff gefertigte Bremsscheiben selbst bei Temperaturen von 800 °C kein nennenswerte Oxidationsschädigung beobachtet werden.

## Patentansprüche

1. Verfahren zum Oxidationsschutz faserverstärkter, kohlenstoffhaltiger Verbundwerkstoffe, deren Matrix zumindest in der Randschicht Siliciumcarbid (SiC) enthält, umfassend folgende Schritte :
a) Imprägnieren des Verbundwerkstoffs mit einer wäßrigen, phosphathaltigen Lösung,
b) nach Trocknung Durchführung einer Wärmebehandlung bei einer Temperatur, welche wenigstens ausreicht, um die getrocknete Lösung in nicht lösliche Verbindungen umzuwandeln, die zur Ausbildung eines selbstheilenden Glases geeignet sind,
**dadurch gekennzeichnet, daß** der Oxidationsschutz an einem faserverstärkten, kohlenstoffhaltigen Verbundwerkstoff ausgebildet wird, dessen Matrix zumindest in der Randschicht neben Siliciumcarbid (SiC) auch Silicium (Si) und/oder Siliciumlegierungen enthält, und daß der Verbundwerkstoff vor dem Schritt a), zwischen den Schritten a) und b), während oder nach dem Schritt b) zur Ausbildung von Siliciumoxid (SiO₂) oxidierend behandelt wird, wobei die oxidierende Behandlung naßchemisch durch anodische Oxidation oder mit Hilfe von Perboraten, Perphosphaten und/oder Perphosphorsäure erfolgt.

2. Verfahren nach Anspruch 1, **dadurch gekennzeichnet, daß** der Siliciumgehalt der Matrix zumindest in der Randschicht oberhalb 1 Gew.-% und vorzugsweise im Bereich von 1 bis 30 Gew.-% bezogen auf das Gesamtgewicht des Werkstoffes oder bezogen auf das Gewicht der mit der SiC-haltigen Matrix durchsetzten Randschicht liegt.

3. Verfahren nach Anspruch 1, **dadurch gekennzeichnet, daß** die naß-chemische Oxidation durch Perborate, Perphosphate und/oder Perphosphorsäure ausgelöst wird.

4. Verfahren nach Anspruch 1, **dadurch gekennzeichnet, daß** die naß-chemische Oxidation durch eine anodische Oxidation hervorgerufen wird.

5. Verfahren nach einem der vorhergehenden Ansprüche, **dadurch gekennzeichnet, daß** die Wärmebehandlung in oxidierender Atmosphäre und/oder Luft durchgeführt wird.

6. Verfahren nach einem der vorhergehenden Ansprüche, **dadurch gekennzeichnet, daß** die wäßrige phosphathaltige Lösung Aluminiumphosphat enthält.

7. Verfahren nach Anspruch 6, **dadurch gekennzeichnet, daß** die wäßrige Lösung einen Massenanteil von mindestens 15 % Monoaluminiumphosphat (Al(H₂PO₄)₃) enthält.

8. Verfahren nach Anspruch 6 oder 7, **dadurch gekennzeichnet, daß** die Lösung lösliche Verbindungen der Elemente Zn, Cu, und/oder B enthält.

9. Verfahren nach einem der vorhergehenden Ansprüche, **dadurch gekennzeichnet, daß** die Wärmebehandlung und/oder die oxidierende Behandlung bei einer Temperatur oberhalb von 480 °C erfolgt.

## Claims

1. A process for protecting fiber-reinforced, carbon-containing composites whose matrix comprises silicon carbide (SiC) at least in the outer layer against oxidation, which comprises the following steps:
a) impregnating the composite with an aqueous, phosphate-containing solution,
b) after drying, carrying out a heat treatment at a temperature which is at least sufficient to convert the dried solution into insoluble compounds which are suitable for forming a self-healing glass,
wherein the oxidation protection is generated on a fiber-reinforced, carbon-containing composite whose matrix comprises, at least in the outer layer, silicon (Si) and/or silicon alloys in addition to silicon carbide (SiC) and the composite is treated oxidatively to form silicon oxide (SiO₂) either prior to step a), between steps a) and b) or during or after step b), with the oxidative treatment taking place wet chemically by means of anodic oxidation or by means of perborates, perphosphates and/or perphosphoric acid.

2. The process as claimed in claim 1, wherein the silicon content of the matrix at least in the outer layer is above 1% by weight and preferably in the range from 1 to 30% by weight, based on the total weight of the composite or based on the weight of the outer layer permeated by the SiC-containing matrix.

3. The process as claimed in claim 1, wherein the wet chemical oxidation is carried out by means of perborates, perphosphates and/or perphosphoric acid.

4. The process as claimed in claim 1, wherein the wet chemical oxidation is carried out by means of anodic oxidation.

5. The process as claimed in any of the preceding claims, wherein the heat treatment is carried out in an oxidizing atmosphere and/or air.

6. The process as claimed in any of the preceding claims, wherein the aqueous phosphate-containing solution comprises aluminum phosphate.

7. The process as claimed in claim 6, wherein the aqueous solution comprises at least 15% by mass of monoaluminum phosphate (Al(H₂PO₄)₃).

8. The process as claimed in claim 6 or 7, wherein the solution comprises soluble compounds of the elements Zn, Cu and/or B.

9. The process as claimed in any of the preceding claims, wherein the heat treatment and/or the oxidative treatment occur(s) at a temperature above 480°C.

## Revendications

1. Procédé de protection contre l'oxydation de matériaux composites à renfort fibreux contenant du carbone, dont la matrice contient du carbure de silicium (SiC) au moins dans la couche superficielle, comprenant les étapes suivantes :
a) Imprégnation du matériau composite par une solution aqueuse contenant du phosphate.
b) Après séchage, réalisation d'un traitement thermique à une température au moins suffisante pour transformer la solution séchée en composés insolubles qui conviennent à l'obtention d'un verre auto-réparateur,
**caractérisé en ce que** la protection contre l'oxydation est constituée d'un matériau composite à renfort fibreux contenant du carbone, dont la matrice contient au moins dans la couche superficielle, outre du carbure de silicium (SiC), du silicium (Si) et/ou des alliages au silicium, et **en ce que** le matériau composite est traité par oxydation avant l'étape a), entre les étapes a) et b), pendant ou après l'étape b), pour former de l'oxyde de silicium (SiO₂), où le traitement oxydant est effectué par voie sèche par oxydation anodique ou à l'aide de perborates, de perphosphates et/ou d'acide perphosphorique.

2. Procédé selon la revendication 1 **caractérisé en ce que** la teneur en silicium de la matrice, au moins dans la couche superficielle, est supérieure à 1 % en poids et se situe de préférence dans le domaine entre 1 et 30 % en poids rapportés au poids total du matériau ou rapporté au poids de la couche superficielle imprégnée de la matrice contenant du SiC.

3. Procédé selon la revendication 1 **caractérisé en ce que** l'oxydation par voie sèche est déclenchée par des perborates, des perphosphates et/ou de l'acide perphosphorique.

4. Procédé selon la revendication 1 **caractérisé en ce que** l'oxydation par voie sèche est engendrée par une oxydation anodique.

5. Procédé selon une des revendications précédentes **caractérisé en ce que** le traitement thermique est effectué en atmosphère oxydante et/ou à l'air.

6. Procédé selon une des revendications précédentes **caractérisé en ce que** la solution aqueuse de phosphates contient du phosphate d'aluminium.

7. Procédé selon la revendication 6 **caractérisé en ce que** la solution aqueuse contient une proportion d'au moins 15 % en poids de monophosphate d'aluminium (Al(H₂PO₄)₃).

8. Procédé selon la revendication 6 ou 7 **caractérisé en ce que** la solution contient des composés solubles des éléments Zn, Cu et/ou B.

9. Procédé selon une des revendications précédentes **caractérisé en ce que** le traitement thermique et/ou le traitement oxydant ont lieu à une température supérieure à 480°C.
